# EUROPÄISCHE PATENTSCHRIFT

(11) **EP 2 786 922 B1**
(45) Veröffentlichungstag und Bekanntmachung des Hinweises auf die Patenterteilung: **27.12.2017**
(21) Anmeldenummer: 13161915.7
(22) Anmeldetag: 02.04.2013
(51) Int. Cl.: B62D 29/04, B62D 27/02

(54) **Kunststoffkarosserie eines Kraftfahrzeugs aus Kunststoffelementen und entsprechende Verbindungen der Elemente**
Body of a motor vehicle made of plastic elements and connection thereof
Carrosserie d'un véhicule automobile réalisée en éléments en polymère et connections entre ces éléments

(43) Veröffentlichungstag der Anmeldung: 08.10.2014
(73) Patentinhaber: Magna Steyr Fahrzeugtechnik AG & Co KG, 8041 Graz (AT)
(72) Erfinder: Erlacher, Manuel, 9545 Radenthein (AT); Hörmann, Reinhard, 8151 Hitzendorf (AT); Zachnegger, Harald, 8041 Graz (AT)
(74) Vertreter: Zangger, Bernd

(56) Entgegenhaltungen:
- WO-A1-2010/003842
- FR-A1- 2 839 697
- GB-A- 2 317 858
- US-A- 5 845 387
- US-A1- 2008 168 644

## Beschreibung

### Gebiet der Erfindung

Die vorliegende Erfindung betrifft eine Karosserie eines Kraftfahrzeugs, umfassend zumindest ein erstes Modulbauteil und ein zweites Modulbauteil, wobei das erste Modulbauteil und das zweite Modulbauteil miteinander verbunden sind.

### Stand der Technik

Eine selbsttragende Karosserie aus faserverstärkten Kunststoff ist aus der EP0670257A1 bekannt. Bei diesem System sind vorgefertigte Karosserieelemente zusammengesetzt, die längs ihrer Stoßlinien durch aushärtendes Kunstharz und gegebenenfalls teilweise mittels Formschluss, beispielsweise durch eine Nut/ Feder Verbindung oder einer Stoßverbindung, der Stoß- bzw. Grenzflächen miteinander verbunden sind.

In der US8038205B2 wird eine Karosseriestruktur welche einen vorderen Bereich der Fahrgastinnenraum definiert beschrieben. Das Fahrzeug umfasst erste und zweite abschließende Rahmenstrukturen und eine Dachstruktur. Die erste abschließende Rahmenstruktur weist eine erste integrierte Verbindungsausstattung auf. Die zweite abschließende Rahmenstruktur weist eine zweite integrierte Verbindungsausstattung auf. Die Dachstruktur ist angrenzend zur ersten und zweiten abschließenden Rahmenstruktur angeordnet und hat integrierte erste und zweite Verbindungsausstattungen. Die erste Verbindungsausstattung greift in die erste Dach Verbindungsausstattung und die zweite Verbindungsausstattung greift in die zweite Dach Verbindungsausstattung zur Befestigung der Dachstruktur mit der ersten und zweiten abschließenden Rahmenstruktur ohne Schweißung. Dabei sind die Verbindungsausstattungen als Schwalbenschwanzverbindungen ausgeführt.

Nachteilig bei dieser Ausführung ist, dass zum Fügen der Karosseriebauteile eine hohe Toleranz- und Fertigungsgenauigkeit erforderlich ist, was wiederum erhöhte Fertigungskosten und Fertigungszeiten bedeutet.

Zusammengesetzte Karosseriestrukturen sind auch aus der gattungsgemäßen WO 2010/003842 A1, und aus der US 2008/168644 A1, FR 2 839 697 A1, US 5 845 387 A und der GB 2 317 858 A bekannt.

### Zusammenfassung der Erfindung

Es ist eine Aufgabe der Erfindung, eine Karosserie eines Kraftfahrzeuges der genannten Art in dieser Hinsicht zu verbessern und insbesondere eine Karosserie eines Kraftfahrzeuges anzugeben, welche eine einfache und kostengünstige Herstellung und trotzdem eine passgenaue, sichere und feste Verbindung der Karosserieelemente ermöglicht.

Gelöst wird die Aufgabe durch die Merkmale von Anspruch 1. Vorteilhafte Weiterbildungen der Erfindung ergeben sich aus den Unteransprüchen. Die Lösung der Aufgabe erfolgt durch eine Karosserie für ein Kraftfahrzeug, umfassend zumindest ein erstes Modulbauteil und ein zweites Modulbauteil, wobei das erste Modulbauteil und das zweite Modulbauteil miteinander verbunden sind, wobei dass das erste Modulbauteil zumindest einen Verbindungsfortsatz aufweist, und das zweite Modulbauteil zumindest eine Verbindungsöffnung aufweist, wobei der Verbindungsfortsatz des ersten Modulbauteils in der Verbindungsöffnung des zweiten Modulbauteils eingesteckt ist, wobei der Verbindungsfortsatz bogenförmig ausgebildet ist und die Geometrie der Verbindungsöffnung entsprechend der Bogenform des Verbindungsfortsatzes angepasst ist, so dass ein Verschwenken des Verbindungsfortsatzes in der Verbindungsöffnung ermöglicht ist.

Erfindungsgemäß sind die ersten Modulbauteile und die zweiten Modulbauteile vorgefertigt. Die Modulbauteile verfügen dabei über eine so hohe Eigensteifigkeit, dass diese so formstabil sind, dass außer den Verbindungsfortsätzen und den Verbindungsöffnungen keine zusätzlichen Vorrichtungen zum Stützen der vorgefertigten Modulbauteile beim Verbinden erforderlich sind.

Es sind lediglich Greifer zum Handhaben der Modulbauteile erforderlich, welche ein Zusammenstecken der ersten Modulbauteile mit den zweiten Modulbauteilen ermöglichen bzw. durchführen.

Es werden beim Verbinden Verbindungsfortsätze in dafür vorgesehene Verbindungsöffnungen gesteckt, wobei die Querschnitte der Verbindungsöffnungen so ausgeführt sind, dass sie den Querschnitten der Verbindungsfortsätze entsprechen. In Einsteckrichtung entspricht die Länge der Verbindungsfortsätze bevorzugt im wesentlichen der Form der Verbindungsöffnungen.

Weiterbildungen der Erfindung sind in den abhängigen Ansprüchen, der Beschreibung sowie den beigefügten Zeichnungen angegeben.

Die folgenden Beispiele für eine Materialwahl der Modulbauteile sollen keine Einschränkungen darstellen, sondern nur als Beispiel dienen. Vorteilhafte Ausführungen ergeben sich in Verbindung mit faserverstärkten Materialien.

In einer bevorzugten Ausführungsform sind die Modulbauteile aus Kunststoff und in einer besonders bevorzugten Ausführungsform aus faserverstärktem Kunststoff hergestellt.

Diese Bauweise erlaubt es besonders leichte Karosserieelemente, wie sie im Automobilbau gefordert sind, bei gleichzeitig hoher Steifigkeit einfach und funktionsgerecht herzustellen.

Dabei wird bevorzugt das Drucksackverfahren oder, besonders bei Kunststoffen, das Spritzgussverfahren angewendet. Das Drucksackverfahren bietet gegenüber dem Vakuumsackverfahren den Vorteil, dass man hohe Drücke aufbringen kann.

Gemäß einer weiteren Ausgestaltung der Erfindung weist das erste Modulbauteil zumindest eine Verbindungsöffnung und/oder das zweite Modulbauteil zumindest einen Verbindungsfortsatz auf.

Bei dieser Ausführungsform weist zumindest ein Modulbauteil sowohl Verbindungsfortsätze als auch Verbindungsöffnungen auf.

Dadurch ist es ermöglicht, dass das entsprechend ausgebildete Modulbauteil in ein anderes Modulbauteil steckbar ist, bzw. dass in das entsprechende Modulbauteil ein weiteres Modulbauteil steckbar ist. Bevorzugt weisen die ersten Modulbauteile und zweiten Modulbauteile eine Vielzahl von Verbindungsfortsätzen und Verbindungsöffnungen auf. Dadurch können mehrere kleinere Verbindungsöffnungen vorgesehen werden wodurch der Querschnitt des jeweiligen Modulbauteils weniger geschwächt wird. Auch ist durch die Anordnung der Verbindungsöffnungen eines Modulbauteils gewährleistet, dass es nur mit einem dazu passenden Modulbauteil verbindbar ist, welches entsprechend angeordnete Verbindungsfortsätze aufweist.

Erfindungsgemäß weist der Verbindungsfortsatz eine Bogenform, insbesondere eine Kreissegmentform auf.

Dabei sind die in die Verbindungsöffnungen gesteckten Verbindungsfortsätze um eine gemeinsame Schwenkachse in den Verbindungsöffnungen verschwenkt. Durch ein Verschwenken der Verbindungsfortsätze in den Verbindungsöffnungen wird eine bessere Verbindung zwischen den ersten Modulbauteilen und den zweiten Modulbauteilen erreicht. Um ein besseres Verschwenken der Verbindungsfortsätze in den Verbindungsöffnungen zu ermöglichen, ist die Geometrie der Verbindungsöffnungen entsprechend der Bogenform der Verbindungsfortsätze angepasst.

In einer weiteren Ausführungsform können die bogenförmigen Verbindungsfortsätze konisch verlaufend ausgeführt werden. Der konische Verlauf ermöglicht einerseits ein einfacheres Einführen des Verbindungsfortsatzes in die Verbindungsöffnung und andererseits beim Verschwenken, aufgrund der konischen Bauteilabmessung, eine Vorspannung und damit eine noch bessere Verbindung zwischen dem ersten Modulbauteil und dem zweiten Modulbauteil.

Um ein Überschwenken der Modulbauteile zu verhindern können ein oder mehrere Verbindungsanschläge an den Modulbauteilen vorgesehen werden. Das zu verschwenkende Modulbauteil kann nur bis zum Verbindungsanschlag verschwenkt werden, wodurch eine richtige Positionierung der zu verbindenden Modulbauteile einfach und genau erfolgen kann.

In einer weiteren erfinderischen Ausführung ist ein Klebstoff, bei faserverstärkten Kunststoff bevorzugt Harz, vorgesehen, welcher im Bereich der Verbindungsfortsätze und Verbindungsöffnungen angeordnet ist. Durch den Klebstoff wird die Festigkeit der Fahrzeugkarosserie erhöht.

Falls erforderlich kann der Klebstoff auch an den Stoßflächen der Modulbauteile angeordnet sein.

An eine Fahrzeugkarosserie werden viele Anforderungen gestellt, im wesentlichen werden an die Fahrzeugkarosserie sämtliche Fahrzeugkomponenten wie Anbauteile, Fahrwerk, Innenausstattung etc. befestigt. Die Fahrzeugkarosserie soll auch alle auf das Kraftfahrzeug wirkenden Kräfte und Momente sicher aufnehmen können. Deshalb werden in einer erfinderischen Ausführung Funktionselemente vorgesehen, welche entsprechende Stege, Schotte, Versteifungen und Krafteinleitungselemente aufweisen. Da im Kraftfahrzeug die Anzahl elektrischer Komponenten zunehmend ist, diese im ganzen Kraftfahrzeug angeordnet sind und mit entsprechender Energie versorgt werden müssen, sind für den im Kraftfahrzeug befindlichen Kabelbaum Kabelschächte vorgesehen, welche in den Modulbauteilen bei der Herstellung mitberücksichtigt werden.

Erfindungsgemäß soll auch ein Verfahren zur Verbindung von zumindest einem ersten Modulbauteil und zumindest einem zweiten Modulbauteil zur Bildung einer Karosserie eines Kraftfahrzeugs beschrieben werden.

In einer bevorzugten Ausführungsform werden mehrere erste und zweite Modulbauteile durch Stecken der Verbindungsfortsätze in die Verbindungsöffnungen miteinander verbunden. Durch das Verbinden aller ersten und zweiten Modulbauteile wird eine Fahrzeugkarosserie gebildet.

Durch ein Verschwenken der ersten Modulbauteile und/oder zweiten Modulbauteile nach dem Stecken wird eine bessere Verbindung erreicht. Wenn die Verbindungsfortsätze einen konischen Verlauf aufweisen wird eine noch festere Verbindung, möglichst ohne Spiel zwischen den Verbindungsfortsätzen und den Verbindungsöffnungen, erreicht.

Zur Bildung der Fahrzeugkarosserie ist eine richtige Aneinanderordnung der einzelnen Modulbauteile in der richtigen Reihenfolge erforderlich. Dazu werden bevorzugt in einem ersten Schritt eine Stirnwand und eine Rückwand in eine Bodenplatte gesteckt und anschließend in ihre endgültige Position verschwenkt. Die Endposition wird besonders dann leicht erreicht, wenn auf der Bodenplatte beispielsweise Verbindungsanschläge vorgesehen werden, die als mechanischer Anschlag für die verschwenkbaren Modulbauteile fungieren. In einem zweiten Schritt werden eine linke und eine rechte Seitenwand in die Bodenplatte gesteckt und anschließend verschwenkt, so dass Verbindungsöffnungen und/oder Verbindungsfortsätze der linken und rechten Seitenwand in Verbindungsfortsätze und/oder Verbindungsöffnungen der Stirnwand und der Rückwand gesteckt sind. Abschließend wird in einem letzten Schritt ein Dach auf die linke und rechte Seitenwand gesteckt.

Zur Erreichung einer besonders steifen Fahrzeugkarosserie werden die ersten Modulbauteile und die zweiten Modulbauteile nach oder während dem Verbinden miteinander, durch Stecken und gegebenenfalls Verschwenken, im Bereich der Verbindungsfortsätze und Verbindungsöffnungen verklebt. Es versteht sich im Rahmen der Erfindung von selbst, dass auch die Stoßflächen bzw. jegliche weitere geeignete Kontaktfläche als Klebefläche genutzt werden kann.

Da die einzelnen Modulbauteile zur Bildung der Fahrzeugkarosserie vorher zusammen gesteckt und gegebenenfalls verschwenkt wurden, ist bereits eine so feste Verbindung erreicht, dass beim Aushärten des Klebstoffes keine Haltevorrichtung zum Halten der Modulbauteile in ihrer Position erforderlich sind. Dadurch können Kosten und Zeit in der Montage eingespart werden.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht einer erfindungsgemäßen Karosserie eines Kraftfahrzeugs.
- Fig. 2: ist eine Darstellung, welche die Modulbauteile gemäß Fig. 1 im unverbauten Zustand zeigt.
- Fig. 3a - 3c: zeigt eine Verbindung erster und zweiter Modulbauteile gemäß Fig. 1 und Fig. 2.
- Fig. 4a - 4c: zeigt eine Verbindung weiterer erster und zweiter Modulbauteile gemäß Fig. 1 und Fig. 2.
- Fig. 5a - 5c: zeigt eine Verbindung weiterer erster und zweiter Modulbauteile gemäß Fig. 1 und Fig. 2.
- Fig. 6a - 6b: zeigt eine Verbindung weiterer erster und zweiter Modulbauteile bis zur Komplettierung der Karosserie gemäß Fig. 1 und Fig. 2.
- Fig. 7a: zeigt ein Verschwenken erster und zweiter Modulbauteile zueinander.
- Fig. 7b: zeigt eine Schnittdarstellung gemäß A-A der Fig. 7a.
- Fig. 7c: zeigt eine perspektivische Ansicht gemäß Fig. 7a.
- Fig. 7d: zeigt einen vergrößerten Ausschnitt gemäß Fig. 7b.
- Fig. 8a - 8c: zeigt Detaildarstellungen unterschiedliche Ausführungsformen erfindungsgemäßer Verbindungsfortsätze und Verbindungsöffnungen.
- Fig. 9a: perspektivische Ansicht eines Verbindungsfortsatzes gemäß Fig. 8b.
- Fig. 9b: Draufsicht bzw. Schnittdarstellung gemäß Fig. 9a.
- Fig. 10: Seitenansicht einer erfindungsgemäßen Karosserie.
- Fig. 11a - 12d: Sind Detailschnitte gemäß Fig. 10 in der Reihenfolge C-C, D-D, E-E, F-F, G-G, L-L, H-H und I-I.
- Fig. 13a - 13b: perspektivische Ansichten von Klebebereichen erfindungsgemäßer erster und zweiter Modulbauteile.
- Fig. 14a - 14d: Detailschnitte von Klebestellen erfindungsgemäßer erster und zweiter Modulbauteile.

### Detaillierte Beschreibung der Erfindung

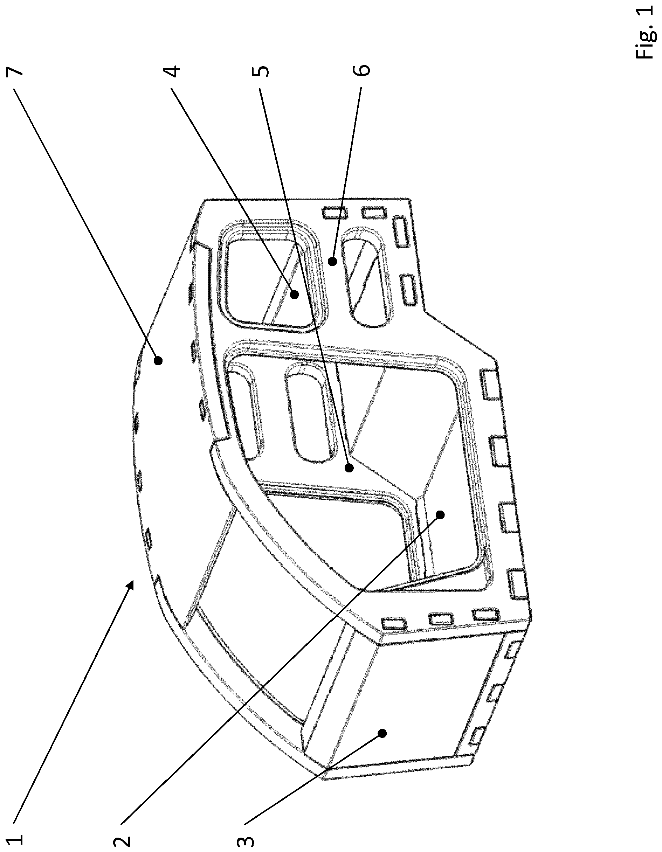

In Fig. 1 ist eine erfindungsgemäße Karosserie 1 eines Kraftfahrzeuges im zusammengebauten Zustand dargestellt. Die Karosserie 1 umfasst im wesentlichen eine Bodenplatte 2, eine Stirnwand 3, eine Rückwand 4, eine rechte Seitenwand 5 und eine linke Seitenwand 6 sowie ein Dach 7. Diese sechs Modulbauteile bilden im verbauten Zustand im wesentlichen eine Fahrgastzelle der erfindungsgemäßen Karosserie 1 eines Kraftfahrzeugs, wobei die Darstellung der Karosserie 1 nur schematisch ausgeführt ist.

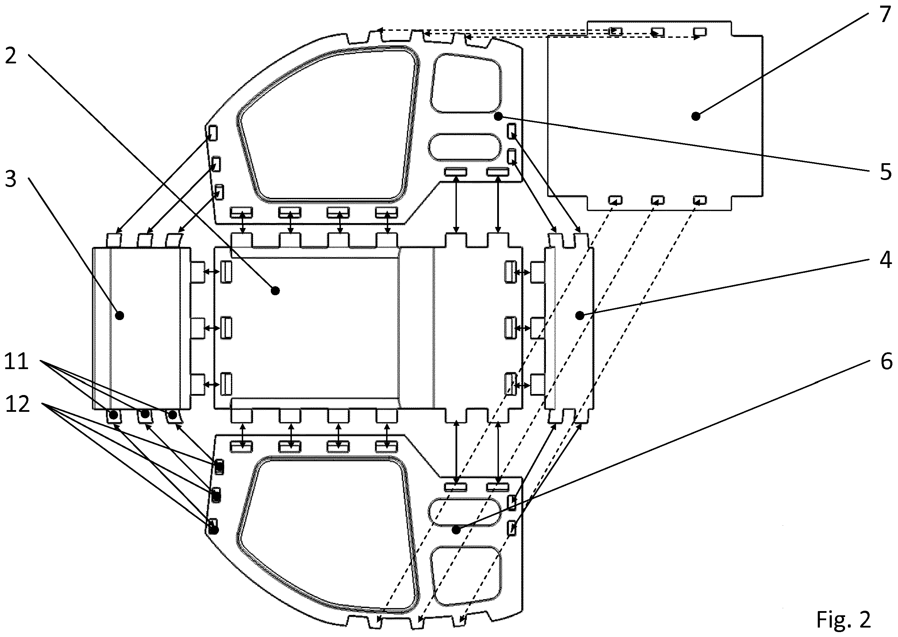

Fig. 2 zeigt die in Fig. 1 aufgezählten Einzelteile im unverbauten Zustand. Die Einzelteile welche als erste Modulbauteile und zweite Modulbauteile ausgeführt sind, weisen erfindungsgemäß Verbindungsfortsätze 11 und/oder Verbindungsöffnungen 12 auf, wobei die Modulbauteile so ausgebildet sind, dass sie mit einem anderen Modulbauteil verbindbar sind, wobei die Verbindungsöffnungen 12 und die Verbindungsfortsätze 11 so ausgebildet sind, dass eine Montage mit anderen, nicht zur Verbindung mit diesem Modulbauteil vorgesehenen, Modulbauteilen ausgeschlossen ist.

Die Modulbauteile weisen Verbindungsfortsätze 11 und Verbindungsöffnungen 12 auf, die passend zu einem jeweiligen Abstand zu einer Verschwenkachse S (nicht dargestellt) eine angepasste Bogenform C (nicht dargestellt) aufweisen, welche ein Verschwenken der Modulbauteile zueinander zulässt, da die Verbindungsfortsätze 11 bzw. Verbindungsöffnungen 12 in einer anderen Höhe zur Verschwenkachse S ausgebildet sind.

Die Bodenplatte 2 weist, wie in Fig. 2 sichtbar, an den Seiten Verbindungsfortsätze 11 auf, während an der Vorder- bzw. Hinterseite Verbindungsöffnungen 12 vorgesehen sind. Die Stirnwand 3 weist Verbindungsfortsätze 11 auf deren Querschnitt dem Querschnitt der Verbindungsöffnungen 12 entspricht. Die Verbindungsfortsätze 11 der Stirnwand 3 sind in die Verbindungsöffnungen 12 im vorderen Bereich der Bodenplatte 2 steckbar und verschwenkbar. Die Verbindungsfortsätze 11 der Rückwand 4 sind in die Verbindungsöffnungen 12 der Hinterseite der Bodenplatte 2 steckbar und verschwenkbar.

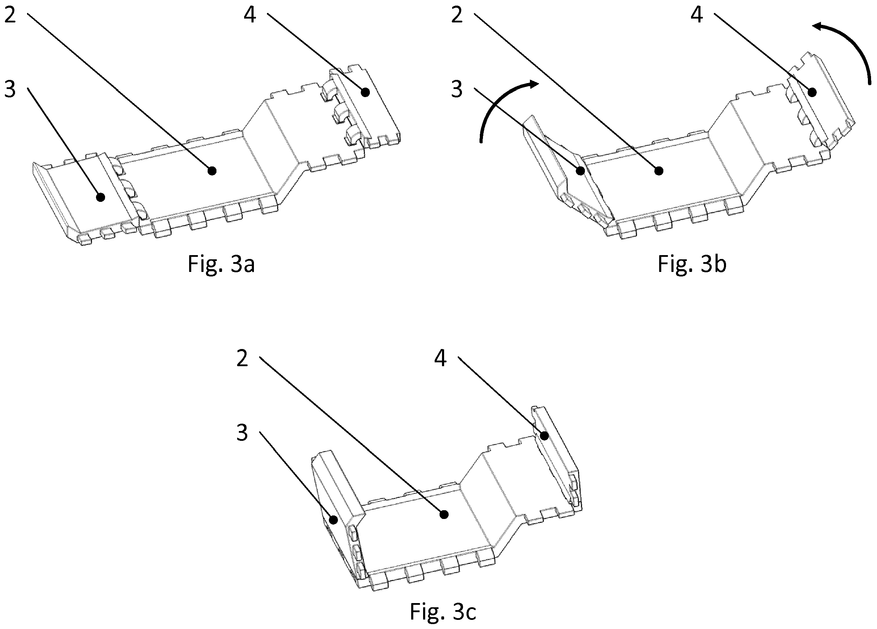

In Fig. 3a wird in einer perspektivischen Ansicht ein Zusammenstecken einer Bodenplatte 2 mit einer Stirnwand 3 und einer Rückwand 4 dargestellt. In Fig. 3b werden die Stirnwand 3 und die Rückwand 4 in Pfeilrichtung verschwenkt. Fig. 3c zeigt die Stirnwand 3 und die Rückwand 4 in ihre Endpositionen verschwenkt. Um die Endposition besser definieren zu können kann man an der Bodenplatte 2 Verbindungsanschläge 13 (nicht dargestellt) vorsehen, welche ein weiteres Verschwenken der Stirnwand 3 und der Rückwand 4 verhindern.

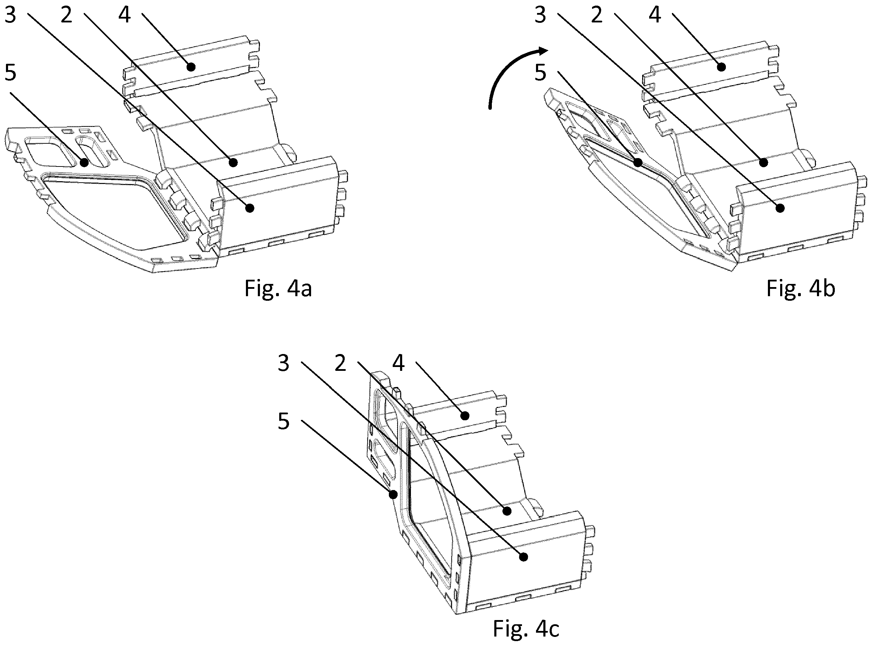

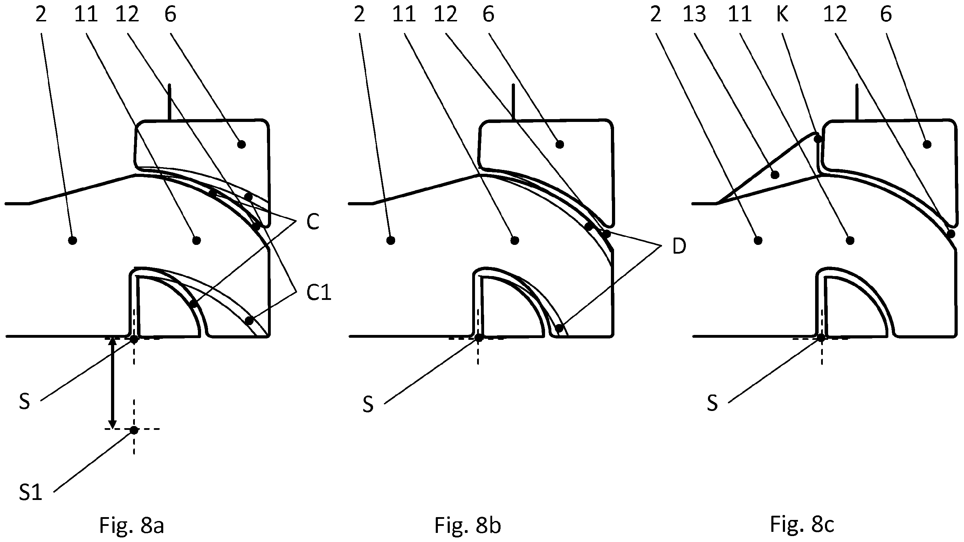

In Fig. 4a wird eine perspektivische Ansicht dargestellt, in der die Stirnwand 3 und die Rückwand 4 ihre Endpositionen in der Bodenplatte 2 erreicht haben. Die Verbindungsfortsätze 11 der Bodenplatte 2 sind in Verbindungsöffnungen 12 einer rechten Stirnwand 5 gesteckt. Fig. 4b zeigt eine perspektivische Ansicht, in der die rechte Seitenwand 5 in Pfeilrichtung verschwenkbar ist. In Fig. 4c ist die Endposition der Stirnwand 5 dargestellt. Die Verbindungsfortsätze 11 der Stirnwand 3 und der Rückwand 4 sind in die Verbindungsöffnungen 12 der rechten Seitenwand 5 gesteckt, wobei die Geometrien der Verbindungsöffnungen 12 und Verbindungsfortsätze 11 entsprechend der gemeinsamen Schwenkachse S, welche im Bereich der Bodenplatte 2 liegt, so angepasst bzw. ausgeführt sind, dass beim Verschwenken der rechten Seitenwand 5 die Verbindungsfortsätze 11 und die entsprechenden Verbindungsöffnungen 12 eine Bogenform C, C1 (s. Fig. 8a) aufweisen, so dass ein problemloses Verbinden der Modulbauteile möglich ist.

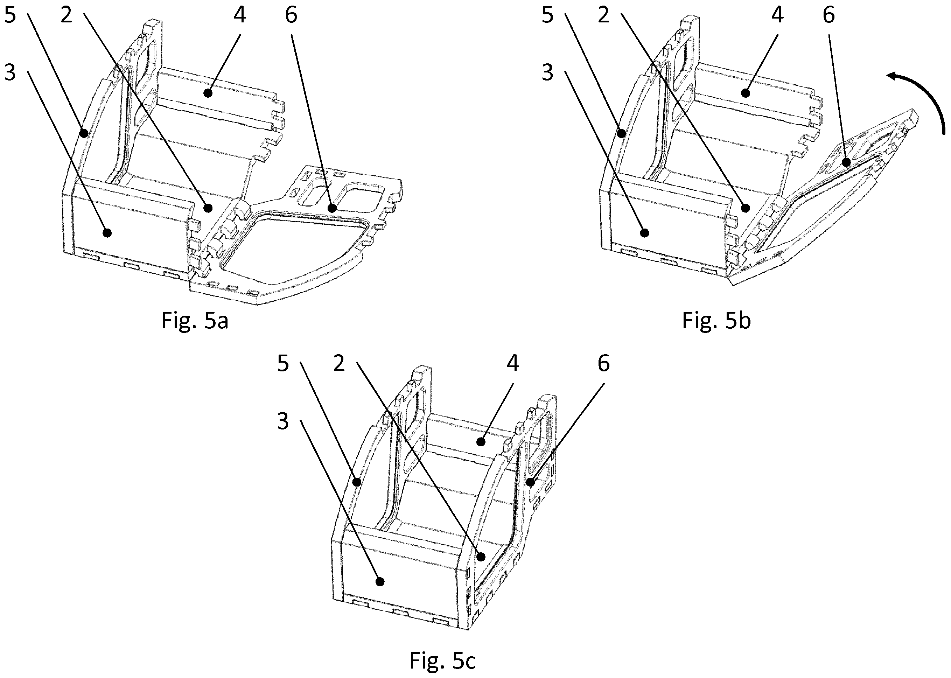

In den Fig. 5a bis Fig. 5c werden die gleichen Abläufe gemäß Fig. 4a bis Fig. 4c für eine linke Seitenwand 6 in perspektivischer Ansicht dargestellt. Es ist denkbar, dass das Verbinden der rechten Seitenwand 5 und der linken Seitenwand 6 in einem gemeinsamen Arbeitsschritt erfolgt.

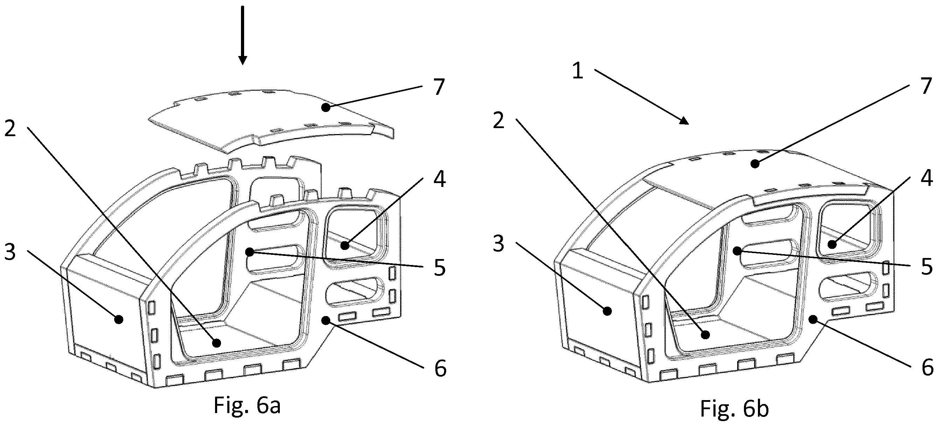

In Fig. 6a ist eine perspektivische Ansicht der erfindungsgemäßen Karosserie 1 eines Kraftfahrzeugs dargestellt, in der ein Dach 7 in Pfeilrichtung auf die rechte Seitenwand 5 und die linke Seitenwand 6 zu stecken ist. Die Verbindungsfortsätze 11 der rechten Seitenwand 5 und der linken Seitenwand 6 und die Verbindungsöffnungen 12 des Daches 7 weisen hier bevorzugt eine konische Geometrie auf. Dadurch wird eine besonders feste und möglichst spielfreie Verbindung der Modulbauteile erreicht.

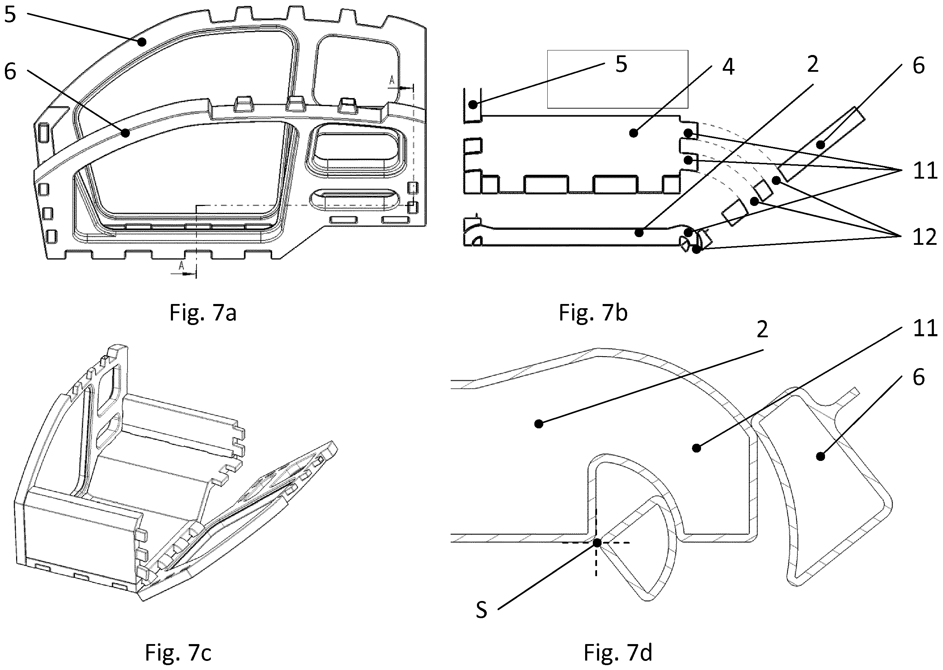

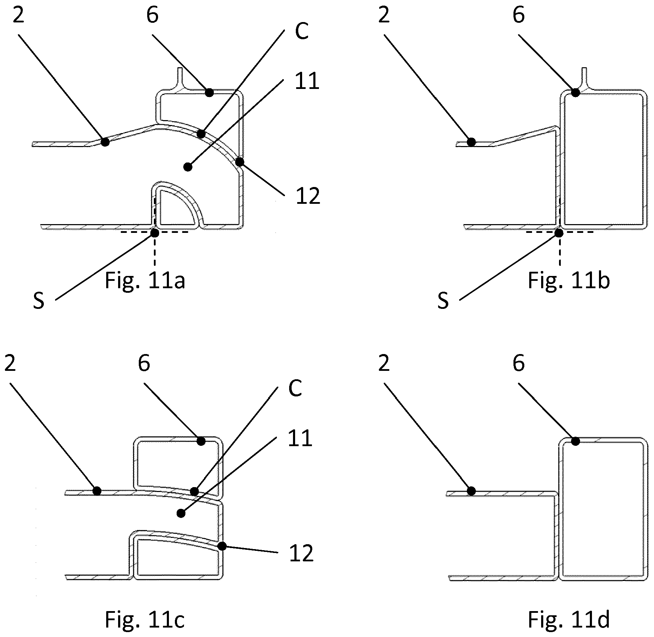

In Fig. 7a ist die rechte Seitenwand 5 in einer Seitenansicht in die Endposition verschwenkt dargestellt. Die linke Seitenwand 6 ist in einer Zwischenposition dargestellt. Fig. 7b zeigt eine Schnittdarstellung von Fig. 7a. Die Verbindungsfortsätze 11 und die Verbindungsöffnungen 12 weisen dabei eine Bogenform C auf (s. Fig. 11c), so dass ein Verschwenken der linken Seitenwand 6 um eine Schwenkachse S, die durch die Schwenkachse S, in Fig. 7d dargestellt, verläuft verschwenkbar ist. Die Bodenplatte 2 ist mit der Rückwand 4 und der rechten Seitenwand 5 verbunden. Die linke Seitenwand 6 ist in einer Zwischenposition dargestellt. In Fig. 7c ist Fig. 7a in einer perspektivischen Ansicht dargestellt. Fig. 7d zeigt eine Vergrößerung eines Ausschnittes der Fig. 7b und stellt im wesentlichen einen Verbindungsfortsatz 11 der Bodenplatte 2 dar sowie eine Verbindungsöffnung 12 der linken Seitenwand 6. Der Querschnitt des Verbindungsfortsatzes 11 entspricht dem Querschnitt der Verbindungsöffnung 12. Die linke Seitenwand 6 wird bei dieser Ausführung um die Schwenkachse S verschwenkt, welche im wesentlichen parallel, in Fahrzeuglängsrichtung, zur Unterkante der Bodenplatte 2, verläuft.

In Fig. 8a ist ein Teilschnitt zwischen zwei miteinander verbundenen Modulbauteilen Bodenplatte 2 und linke Seitenwand 6 dargestellt. Der dargestellte Pfeil zwischen Schwenkachse S und Schwenkachse S1 soll zeigen, dass die Schwenkachse S variabel beliebig gewählt werden kann. Das Verschieben der Schwenkachse S1 nach unten erlaubt eine flachere Ausführung der Bogenform C zu Bogenform C1 der Verbindungsfortsätze 11 der Bodenplatte 2 und Verbindungsöffnungen 12 der linken Seitenwand 6. Die Verschiebung der Schwenkachse S könnte beispielsweise aus Montagegründen erforderlich sein. Eine flache Ausführung der Bogenform C1 ist dann erforderlich, wenn die Verbindungsfortsätze 11 und Verbindungsöffnungen 12 der Modulbauteile in verschiedenen Abständen zur Schwenkachse S angeordnet sind.

In Fig. 8b wird ein konischer Verlauf D durch eine geänderte Geometrie des Verbindungsfortsatzes 11 dargestellt. Durch den konischen Verlauf D des Verbindungsfortsatzes 11 ist ein leichteres Einstecken der beispielsweise linken Seitenwand 6 in die Bodenplatte 2 ermöglicht. Beim Verschwenken der linken Seitenwand 6 wird diese gegen die Bodenplatte 2, aufgrund des "dicker" werdenden Verbindungsfortsatzes 11 in Richtung des Modulbauteils vorgespannt und eine möglichst spielfreie Verbindung erreicht. Dies führt zu einer noch festeren Verbindung der Modulbauteile miteinander.

Fig. 8c zeigt einen erfindungsgemäßen Verbindungsanschlag 13, welcher bevorzugt auf der Bodenplatte 2 ausgebildet ist. Der Verbindungsanschlag 13 verhindert ein weiteres Verschwenken der beispielsweise linken Seitenwand 6. Die Kontaktfläche K des Verbindungsanschlags 13 kann in einer bevorzugten Ausführung ebenfalls als Klebestelle genutzt werden.

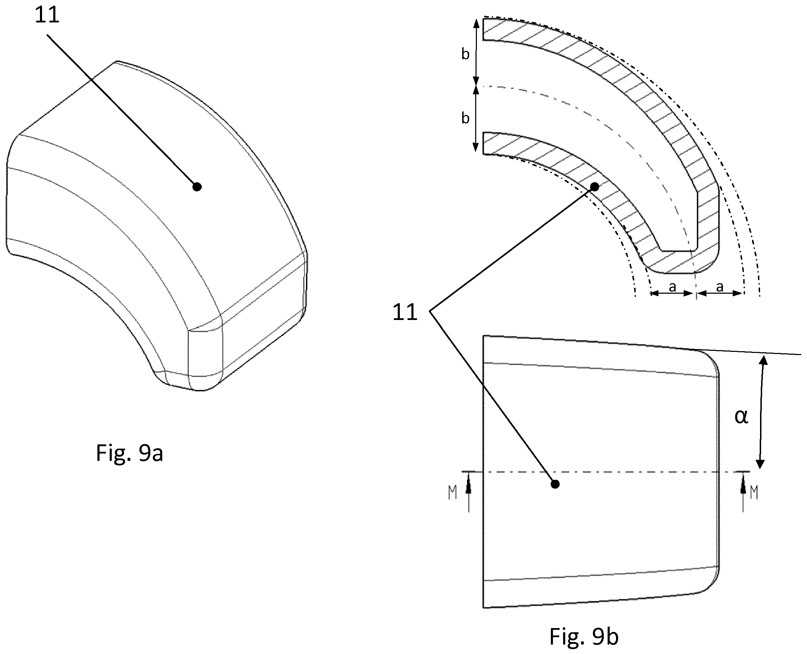

In Fig. 9b werden eine Draufsicht und ein Schnitt einer perspektivischen Ansicht aus Fig. 9a eines erfindungsgemäßen Verbindungsortsatzes 11, wie bereits in Fig. 8b dargestellt. Der Verbindungsfortsatz 11 verjüngt sich von Maß b bis zum Anfang des Verbindungsfortsatzes 11 auf ein Maß a. In der Draufsicht wird eine Verjüngung der Breite des Verbindungsfortsatzes 11 durch einen Winkel α dargestellt. Die Verjüngung des Verbindungsfortsatzes 11 erleichtert das Stecken in eine Verbindungsöffnung 12 (nicht dargestellt), wodurch eine Montage der Modulbauteile erleichtert wird.

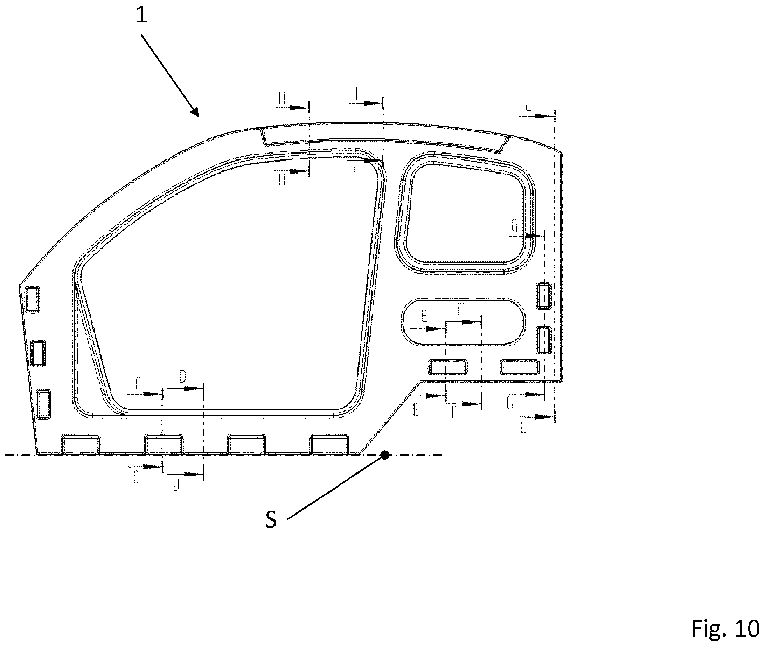

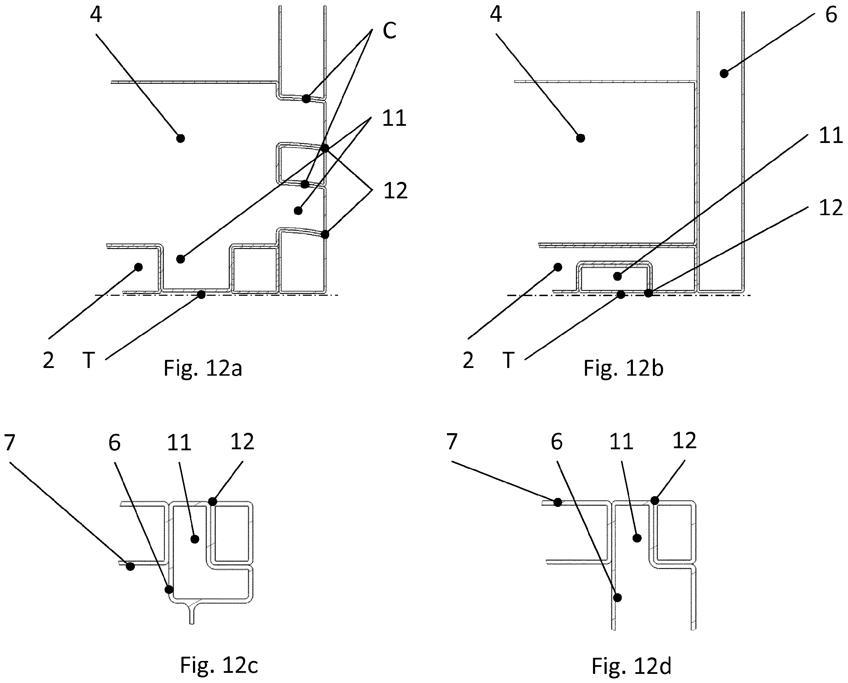

In Fig. 10 wird eine Seitenansicht einer erfindungsgemäßen Karosserie 1 eines Kraftfahrzeugs dargestellt. in Fig. 11a bis Fig. 12d erläutern die Schnittverläufe der in Fig. 10 gekennzeichneten Teilschnitte, welche in Fahrzeugquerrichtung verlaufen, erläutert werden. Fig. 11a zeigt einen Teilschnitt C-C wie er auch schon in den Figuren 8a - 8c gezeigt wurde. Der Teilschnitt C-C, in Fig. 11a ist im Bereich des Verbindungsfortsatzes 11 der Bodenplatte 2 und der Verbindungsöffnung 12 der linken Seitenwand 6 und zeigt die Bodenplatte 2 mit der linken Seitenwand 6 im verbundenen Zustand. Die Schwenkachse S liegt im Bereich der Unterkante der Bodenplatte 2 und verläuft, in Fahrzeuglängsrichtung gesehen, parallel zu dieser. Die Bogenform C der Verbindungsöffnung 12 und des Verbindungsfortsatzes 11 sind im wesentlichen kreissegmentförmig und weisen einen Radius auf, der dem Abstand zur Schwenkachse S im verbundenen Zustand entspricht. Der Verbindungsfortsatz 11 ist so ausgebildet, dass dieser bündig mit der Außenkante des entsprechenden Modulbauteils abschließt. Fig. 11b zeigt einen Teilschnitt D-D welcher zwischen zwei erfindungsgemäßen Verbindungsfortsätzen 11 bzw. Verbindungsöffnungen 12 liegt. Da die Schwenkachse S unter der Unterkante der Bodenplatte 2 liegt, muss zur Verbindung der Modulbauteile die Geometrie der Modulbauteile nicht speziell angepasst werden, um ein Verschwenken der linken Seitenwand 6 zu ermöglichen. In Fig. 11c ist ein Teilschnitt E-E dargestellt, welcher durch einen Verbindungsfortsatz 11 der Bodenplatte 2 bzw. Verbindungsöffnung der linken Seitenwand 6 im hinteren Bereich, in Fahrzeuglängsrichtung betrachtet, verläuft. Da die Schwenkachse S im Bereich der Unterkante der Bodenplatte 2 liegt, weist der Querschnitt des Verbindungsfortsatzes 11 bzw. der Verbindungsöffnung eine Bogenform C auf, wobei der Bogen des Verbindungsfortsatzes 11 und der Verbindungsöffnung 12 einen Radius entsprechend dem Abstand zur Schwenkachse S im verbundenen Zustand der beiden Modulbauteile aufweist. Fig. 11d zeigt einen Teilschnitt F-F zwischen den Verbindungsfortsätzen 11 und Verbindungsöffnungen 12. Fig. 12a zeigt einen Teilschnitt G-G, welcher, in Fahrzeuglängsrichtung gesehen, vor dem Teilschnitt L-L, in Fig. 12b dargestellt, erfolgt. Die Rückwand 4 ist um die Schwenkachse T, welche parallel zur Fahrzeugquerrichtung und unter der Unterkante des hinteren Bereichs der Bodenplatte 2 verläuft, mit der Bodenplatte 2 verbunden. Der Verbindungsfortsatz 11 der Rückwand 4, und die Verbindungsöffnung 12 der Bodenplatte 2 weisen den gleichen Querschnitt auf. In Fig. 12c und Fig. 12d ist jeweils ein Teilschnitt H-H bzw. I-I im Bereich des Verbindungsfortsatzes 11 der linken Seitenwand 6 und der Verbindungsöffnung 12 des Daches 7 dargestellt. Das Dach 7 schließt mit der linken Seitenwand 6 und der rechten Seitenwand 5 bündig ab. Das Dach 7 weist bevorzugt eine Bombierung in Fahrzeugquerrichtung und in Fahrzeuglängsrichtung auf. Der Verlauf der rechten Seitenwand 5 und der linken Seitenwand 6 sind diesem bombierten Verlauf angepasst.

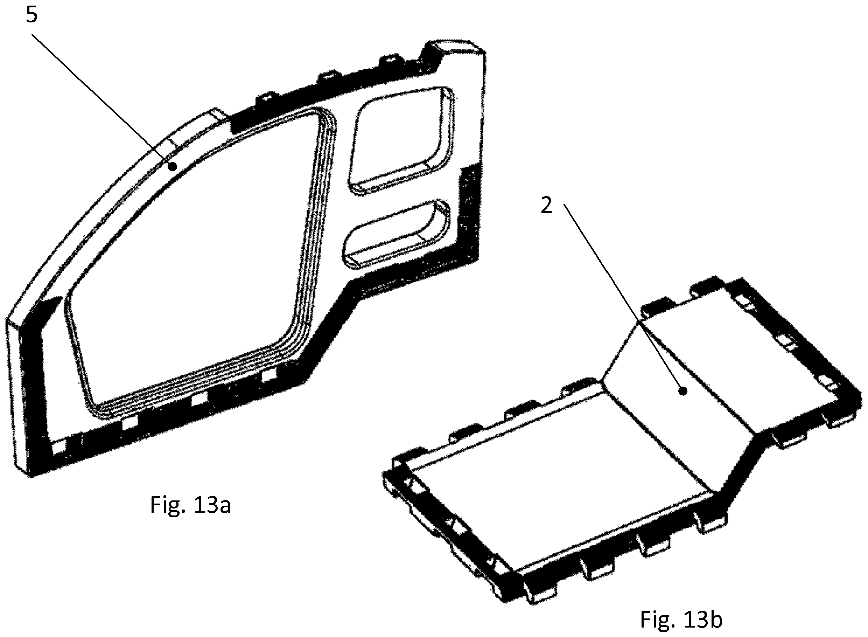

In Fig. 13a und Fig. 13b sind perspektivisch beispielhaft die rechte Seitenwand 5 und die Bodenplatte 2 dargestellt. Die geschwärzten Flächen stellen die Bereiche dar, an denen bevorzugt ein Klebstoff, zur besseren Verbindung der einzelnen Modulbauteile miteinander, aufgebracht werden kann. Der Klebstoff wird raupenförmig auf die Kontaktflächen der Modulbauteile aufgebracht. Wird Harz als Klebstoff verwendet, wird dieser bevorzugt großflächig aufgetragen. Im Rahmen der Erfindung ist es auch denkbar, dass andere Flächen der Modulbauteile, beispielsweise die Kontaktflächen eines Verbindungsanschlags, als zusätzliche Klebeflächen genutzt werden.

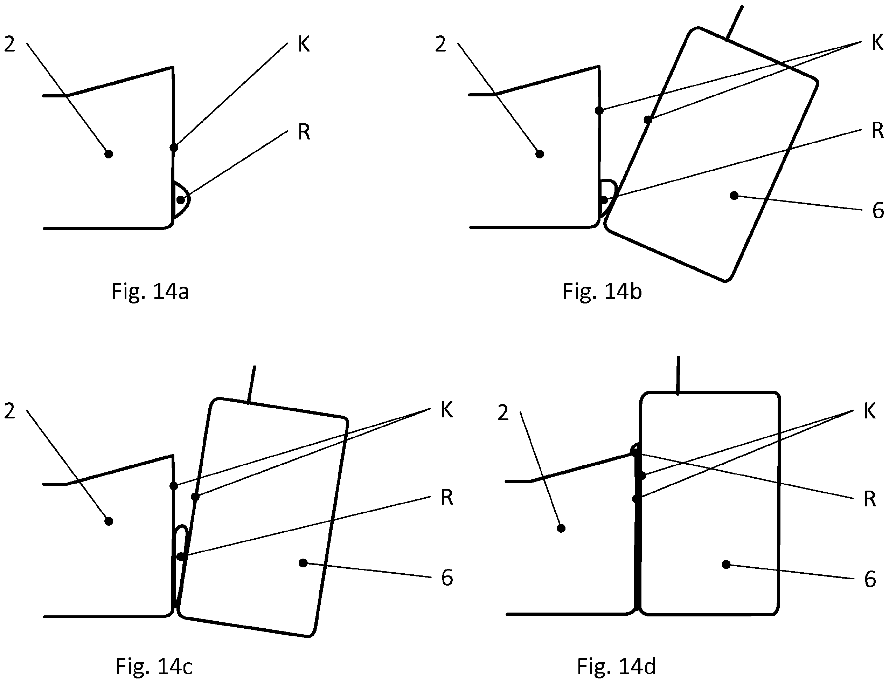

In Fig. 14a ist ein Querschnitt eines Modulbauteils, beispielsweise einer Bodenplatte 2 dargestellt. Die Bodenplatte 2 weist eine Kontaktfläche K auf, auf welcher eine Klebstoffraupe R aufgebracht ist. Fig. 14b zeigt den Querschnitt der Bodenplatte 2 mit der Klebstoffraupe R auf der Kontaktfläche K, wobei ein weiteres Modulbauteil, beispielsweise eine linke Seitenwand 6 mit der Bodenplatte 2 verbunden wird. In Fig. 14c wird die Klebstoffraupe R zwischen der Kontaktfläche K der Bodenplatte 2 und der linken Seitenwand 6 durch ein aneinanderfügen auf den Kontaktflächen verteilt. In Fig. 14d sind die Bodenplatte 2 und die linke Seitenwand 6 miteinander verbunden die Klebstoffraupe R ist vollständig und gleichmäßig an beiden Kontaktflächen K der Bodenplatte 2 und der linken Seitenwand 6 verteilt.

### Bezugszeichenliste

- 1: Karosserie
- 2: Bodenplatte
- 3: Stirnwand
- 4: Rückwand
- 5: rechte Seitenwand
- 6: linke Seitenwand
- 7: Dach
- 11: Verbindungsfortsatz
- 12: Verbindungsöffnung
- 13: Verbindungsanschlag

- C, C1: Bogenform
- D, D1: konischer Verlauf
- K: Kontaktfläche
- R: Klebstoffraupe
- S, S1: Schwenkachse
- T: Schwenkachse
- α: Verjüngungswinkel

## Patentansprüche

1. Karosserie (1) eines Kraftfahrzeugs, umfassend zumindest ein erstes Modulbauteil und zumindest ein zweites Modulbauteil, wobei das erste Modulbauteil und das zweite Modulbauteil miteinander verbunden sind, wobei zur Verbindung der Modulbauteile miteinander das erste Modulbauteil zumindest einen Verbindungsfortsatz (11) aufweist, und das zweite Modulbauteil zumindest eine Verbindungsöffnung (12) aufweist, wobei der Verbindungsfortsatz (11) des ersten Modulbauteils durch eine Verbindungsöffnung (12) des zweiten Modulbauteils gesteckt ist, **dadurch gekennzeichnet, dass** der Verbindungsfortsatz (11) bogenförmig ausgebildet ist und die Geometrie der Verbindungsöffnung (12) entsprechend der Bogenform des Verbindungsfortsatzes (11) angepasst ist, so dass ein Verschwenken des Verbindungsfortsatzes (11) in der Verbindungsöffnung (12) ermöglicht ist.

2. Karosserie (1) eines Kraftfahrzeugs nach Anspruch 1,
**dadurch gekennzeichnet, dass** die ersten Modulbauteilen und zweiten Modulbauteile aus Kunststoff und in einer besonders bevorzugten Ausführungsform aus faserverstärktem Kunststoff hergestellt sind.

3. Karosserie (1) eines Kraftfahrzeugs nach Anspruch 2,
**dadurch gekennzeichnet, dass** die ersten Modulbauteilen und zweiten Modulbauteile im Drucksackverfahren oder im Spritzgussverfahren hergestellt werden.

4. Karosserie (1) eines Kraftfahrzeugs nach Anspruch 1,
**dadurch gekennzeichnet, dass** das erste Modulbauteil zumindest eine Verbindungsöffnung (12) und/oder das zweite Modulbauteil einen Verbindungsfortsatz (11) aufweist.

5. Karosserie (1) eines Kraftfahrzeugs nach Anspruch 1,
**dadurch gekennzeichnet, dass** die ersten Modulbauteilen und zweiten Modulbauteile eine Vielzahl an Verbindungsfortsätzen (11) und Verbindungsöffnungen (12) aufweisen.

6. Karosserie (1) eines Kraftfahrzeugs nach Anspruch 1,
**dadurch gekennzeichnet, dass** der Verbindungsfortsatz (11) kreissegmentförmig ausgebildet ist.

7. Karosserie (1) eines Kraftfahrzeugs nach Anspruch 1,
**dadurch gekennzeichnet, dass** die Verbindungsfortsätze (11) und Verbindungsöffnungen (12) konisch ausgebildet sind.

8. Karosserie (1) eines Kraftfahrzeugs nach Anspruch 1,
**dadurch gekennzeichnet, dass** die ersten Modulbauteilen und zweiten Modulbauteile Verbindungsanschläge (13) aufweisen.

9. Karosserie (1) eines Kraftfahrzeugs nach Anspruch 1,
**dadurch gekennzeichnet, dass** die ersten Modulbauteile und zweiten Modulbauteile mit einem Klebstoff im Bereich der Verbindungsfortsätze (11) und Verbindungsöffnungen (12) aufweisen.

10. Karosserie (1) eines Kraftfahrzeugs nach Anspruch 1,
**dadurch gekennzeichnet, dass** die ersten Modulbauteile und zweiten Modulbauteile zusätzliche Funktionselemente, insbesondere Kabelschächte, Versteifungen, Stege, Krafteinleitungselemente und Schotte aufweisen.

11. Verfahren zur Verbindung von zumindest einem ersten Modulbauteil und zumindest einem zweiten Modulbauteil einer Karosserie eines Kraftfahrzeugs nach einem der vorhergehenden Ansprüche, **dadurch gekennzeichnet, dass** mehrere erste und mehrere zweite Modulbauteile durch Stecken der Verbindungsfortsätze (11) in die Verbindungsöffnungen (12) miteinander verbunden werden, so dass durch die ersten Modulbauteile und zweiten Modulbauteile eine Karosserie(1) eines Kraftfahrzeugs gebildet wird.

12. Verfahren nach Anspruch 11, **dadurch gekennzeichnet, dass** die ersten Modulbauteile und/oder die zweiten Modulbauteile nach dem Zusammenstecken verschwenkt werden.

13. Verfahren nach Anspruch 11 oder 12, **dadurch gekennzeichnet, dass** die ersten Modulbauteile und die zweiten Modulbauteile zur Bildung einer Karosserie im wesentlichen eine linke Seitenwand (6) und eine rechten Seitenwand (5) sowie eine Bodenplatte (2), eine Stirnwand (3), eine Rückwand (4) und ein Dach (7) umfassen, wobei im ersten Schritt die Stirnwand (3) und die Rückwand in die Bodenplatte (2) steckverbunden und anschließend verschwenkt werden, und dass im nächsten Schritt die linke Seitenwand (6) und die rechte Seitenwand (5) mit der Bodenplatte (2) steckverbunden und anschließend verschwenkt werden, so dass Verbindungsöffnungen (12) oder Verbindungsfortsätze (11) der linken Seitenwand (6) und der rechten Seitenwand (5) in Verbindungsfortsätze (11) oder Verbindungsöffnungen (12) der Stirnwand (3) und der Rückwand (4) gesteckt sind, und dass im letzten Schritt ein Dach (7) auf die aufgeschwenkte linke Seitenwand (6) und rechte Seitenwand (5) gesteckt wird.

14. Verfahren nach Anspruch 11 bis 13, **dadurch gekennzeichnet, dass** die ersten Modulbauteile und zweiten Modulbauteile nach oder während dem Verbinden miteinander durch Stecken und gegebenenfalls Verschwenken im Bereich der Verbindungsfortsätze (11) und Verbindungsöffnungen (12) verklebt werden, wobei insbesondere die Modulbauteile während der Aushärtung des Klebstoffs nicht von einer Haltevorrichtung in Position gehalten werden.

## Claims

1. Body (1) of a motor vehicle, comprising at least one first modular component and at least one second modular component, wherein the first modular component and the second modular component are connected to each other, wherein, in order to connect the modular components to one another, the first modular component has at least one connection extension (11), and the second modular component has at least one connection opening (12), wherein the connection extension (11) of the first modular component is plugged through a connection opening (12) of the second modular component, **characterized in that** the connection extension (11) is of arcuate design, and the geometry of the connection opening (12) is adapted in a manner corresponding to the arc shape of the connection extension (11), and therefore the connection extension (11) can be pivoted in the connection opening (12).

2. Body (1) of a motor vehicle according to Claim 1, **characterized in that** the first modular components and second modular components are made of plastic and, in a particularly preferred embodiment, are made of fibre-reinforced plastic.

3. Body (1) of a motor vehicle according to Claim 2, **characterized in that** the first modular components and second modular components are produced in the pressure bag process or in the injection-moulding process.

4. Body (1) of a motor vehicle according to Claim 1, **characterized in that** the first modular component has at least one connection opening (12) and/or the second modular component has a connection extension (11).

5. Body (1) of a motor vehicle according to Claim 1, **characterized in that** the first modular components and second modular components have a multiplicity of connection extensions (11) and connection openings (12).

6. Body (1) of a motor vehicle according to Claim 1, **characterized in that** the connection extension (11) is designed in the shape of a segment of a circle.

7. Body (1) of a motor vehicle according to Claim 1, **characterized in that** the connection extensions (11) and connection openings (12) are of conical design.

8. Body (1) of a motor vehicle according to Claim 1, **characterized in that** the first modular components and second modular components have connection stops (13).

9. Body (1) of a motor vehicle according to Claim 1, **characterized in that** the first modular components and second modular components have with an adhesive in the region of the connection extensions (11) and connection openings (12).

10. Body (1) of a motor vehicle according to Claim 1, **characterized in that** the first modular components and second modular components have additional function elements, in particular cable ducts, reinforcements, webs, force introduction elements and partitions.

11. Method for the connection of at least one first modular component and at least one second modular component of a body of a motor vehicle according to one of the preceding claims, **characterized in that** a plurality of first and a plurality of second modular components are connected to one another by plugging of the connection extensions (11) into the connection openings (12) such that a body (1) of a motor vehicle is formed by the first modular components and second modular components.

12. Method according to Claim 11, **characterized in that** the first modular components and/or the second modular components are pivoted after being plugged together.

13. Method according to Claim 11 or 12, **characterized in that**, in order to form a body, the first modular components and the second modular components substantially comprise a left side wall (6) and a right side wall (5), and also a floor plate (2), an end wall (3), a rear wall (4) and a roof (7), wherein, in the first step, the end wall (3) and the rear wall are connected into the floor plate (2) by plugging and are subsequently pivoted, and **in that**, in the next step, the left side wall (6) and the right side wall (5) are connected together with the floor plate (2) by plugging and are subsequently pivoted such that connection openings (12) or connection extensions (11) of the left side wall (6) and of the right side wall (5) are plugged into connection extensions (11) or connection openings (12) of the end wall (3) and of the rear wall (4), and **in that**, in the final step, a roof (7) is plugged onto the pivoted-up left side wall (6) and right side wall (5).

14. Method according to Claims 11 to 13, **characterized in that** the first modular components and second modular components are adhesively bonded after or during the connection to one another by plugging and optionally pivoting in the region of the connection extensions (11) and connection openings (12), wherein in particular the modular components are not held in position by a holding device during the curing of the adhesive.

## Revendications

1. Carrosserie (1) d'un véhicule automobile, comprenant au moins un premier composant modulaire et au moins un deuxième composant modulaire, le premier composant modulaire et le deuxième composant modulaire étant connectés l'un à l'autre, le premier composant modulaire, pour la connexion des composants modulaires l'un à l'autre, présentant au moins une saillie de connexion (11), et le deuxième composant modulaire présentant au moins une ouverture de connexion (12), la saillie de connexion (11) du premier composant modulaire étant enfichée à travers une ouverture de connexion (12) du deuxième composant modulaire, **caractérisée en ce que** la saillie de connexion (11) est réalisée sous forme courbe et la géométrie de l'ouverture de connexion (12) est adaptée de manière correspondant à la forme courbe de la saillie de connexion (11) de telle sorte qu'un pivotement de la saillie de connexion (11) dans l'ouverture de connexion (12) soit possible.

2. Carrosserie (1) d'un véhicule automobile selon la revendication 1,
**caractérisée en ce que** les premiers composants modulaires et les deuxièmes composants modulaires sont fabriqués en polymère et, dans une forme de réalisation particulièrement préférée, en polymère renforcé par des fibres.

3. Carrosserie (1) d'un véhicule automobile selon la revendication 2,
**caractérisée en ce que** les premiers composants modulaires et les deuxièmes composants modulaires sont fabriqués par un procédé de moulage avec vessie ou par un procédé de moulage par injection.

4. Carrosserie (1) d'un véhicule automobile selon la revendication 1,
**caractérisée en ce que** le premier composant modulaire présente au moins une ouverture de connexion (12) et/ou le deuxième composant modulaire présente une saillie de connexion (11).

5. Carrosserie (1) d'un véhicule automobile selon la revendication 1,
**caractérisée en ce que** les premiers composants modulaires et les deuxièmes composants modulaires présentent une pluralité de saillies de connexion (11) et d'ouvertures de connexion (12).

6. Carrosserie (1) d'un véhicule automobile selon la revendication 1,
**caractérisée en ce que** la saillie de connexion (11) est réalisée en forme de segment de cercle.

7. Carrosserie (1) d'un véhicule automobile selon la revendication 1,
**caractérisée en ce que** les saillies de connexion (11) et les ouvertures de connexion (12) sont réalisées sous forme conique.

8. Carrosserie (1) d'un véhicule automobile selon la revendication 1,
**caractérisée en ce que** les premiers composants modulaires et les deuxièmes composants modulaires présentent des butées de connexion (13).

9. Carrosserie (1) d'un véhicule automobile selon la revendication 1,
**caractérisée en ce que** les premiers composants modulaires et les deuxièmes composants modulaires présentent avec un adhésif dans la région des saillies de connexion (11) et des ouvertures de connexion (12).

10. Carrosserie (1) d'un véhicule automobile selon la revendication 1,
**caractérisée en ce que** les premiers composants modulaires et les deuxièmes composants modulaires présentent des éléments fonctionnels supplémentaires, en particulier des conduits de câbles, des renforcements, des nervures, des éléments d'introduction de force et des cloisons.

11. Procédé pour connecter au moins un premier composant modulaire et au moins un deuxième composant modulaire d'une carrosserie d'un véhicule automobile selon l'une quelconque des revendications précédentes,
**caractérisé en ce que** plusieurs premiers et plusieurs deuxièmes composants modulaires sont connectés les uns aux autres par enfichage des saillies de connexion (11) dans les ouvertures de connexion (12) de telle sorte qu'une carrosserie (1) d'un véhicule automobile soit formée par les premiers composants modulaires et les deuxièmes composants modulaires.

12. Procédé selon la revendication 11, **caractérisé en ce que** les premiers composants modulaires et/ou les deuxièmes composants modulaires sont pivotés après l'enfichage.

13. Procédé selon la revendication 11 ou 12, **caractérisé en ce que** les premiers composants modulaires et les deuxièmes composants modulaires, pour la formation d'une carrosserie, présentent essentiellement une paroi latérale gauche (6) et une paroi latérale droite (5) ainsi qu'une plaque de fond (2), une paroi frontale (3), une paroi arrière (4) et un toit (7), dans la première étape, la paroi frontale (3) et la paroi arrière étant connectées par enfichage dans la plaque de fond (2) et étant ensuite pivotées, et **en ce que** dans l'étape suivante, la paroi latérale gauche (6) et la paroi latérale droite (5) sont connectées par enfichage à la plaque de fond (2) et sont ensuite pivotées, de telle sorte que des ouvertures de connexion (12) ou des saillies de connexion (11) de la paroi latérale gauche (6) et de la paroi latérale droite (5) soient enfichées dans des saillies de connexion (11) ou des ouvertures de connexion (12) de la paroi frontale (3) et de la paroi arrière (4), et **en ce que** dans la dernière étape, un toit (7) est enfiché sur la paroi latérale gauche (6) et la paroi latérale droite (5) pivotées.

14. Procédé selon les revendications 11 à 13, **caractérisé en ce que** les premiers composants modulaires et les deuxièmes composants modulaires, sont collés avant ou pendant la connexion les uns aux autres par enfichage et éventuellement pivotement dans la région des saillies de connexion (11) et des ouvertures de connexion (12), les composants modulaires, notamment pendant le durcissement de l'adhésif, n'étant pas retenus en position par un dispositif de retenue.
